# EUROPÄISCHE PATENTSCHRIFT

(11) **EP 0 767 889 B1**
(45) Veröffentlichungstag und Bekanntmachung des Hinweises auf die Patenterteilung: **02.09.1998**
(21) Anmeldenummer: 95924323.9
(22) Anmeldetag: 24.06.1995
(51) Int. Cl.: F24J 2/06, F24J 2/04, F24J 2/50

(54) **VORRICHTUNG ZUR GEWINNUNG VON ENERGIE AUS SONNENLICHT MIT MINDESTENS EINEM SOLARKOLLEKTOR**
DEVICE FOR OBTAINING ENERGY FROM SUNLIGHT WITH AT LEAST ONE SOLAR COLLECTOR
DISPOSITIF POUR LA PRODUCTION D'ENERGIE A PARTIR DE LA LUMIERE SOLAIRE, COMPORTANT AU MOINS UN COLLECTEUR SOLAIRE

(30) Priorität: 29.06.1994 DE 4422755
(43) Veröffentlichungstag der Anmeldung: 16.04.1997
(73) Patentinhaber: Daume, Jochen, 42659 Solingen (DE); Bauer, Heinrich, 67661 Kaiserslautern (DE); Grimm, Arnold, D-36124 Eichenzell (DE)
(72) Erfinder: Daume, Jochen, 42659 Solingen (DE); Bauer, Heinrich, 67661 Kaiserslautern (DE); Grimm, Arnold, D-36124 Eichenzell (DE)
(74) Vertreter: Patentanwälte Dr. Solf & Zapf
(86) Internationale Anmeldenummer: EP9502465
(87) Internationale Veröffentlichungsnummer: WO9600871

(56) Entgegenhaltungen:
- EP-A- 0 001 763
- EP-A- 0 004 060
- EP-A- 0 328 045
- DE-A- 2 557 215
- DE-A- 2 933 156
- FR-A- 2 523 279
- FR-A- 2 530 787
- US-A- 4 022 186
- US-A- 4 069 812
- US-A- 4 133 298
- US-A- 4 284 839
- US-A- 4 299 201
- US-A- 4 337 759
- US-A- 4 586 489
- PATENT ABSTRACTS OF JAPAN vol. 4 no. 41 (M-5) ,29.März 1980 & JP,A,55 012322 (HITACHI LTD) 28.Januar 1980,
- PATENT ABSTRACTS OF JAPAN vol. 4 no. 41 (M-5) ,29.März 1980 & JP,A,55 012386 (MITSUBISHI ELECTRIC CORP) 28.Januar 1980,
- 21ST INTERSOCIETY ENERGY CONVERSION ENGINEERING CONFERENCE 'advancing toward technology breakout in energy conversion' 1986 , AMERICAN CHEMICAL SOCIETY , SAN DIEGO siehe Seite 2039 - Seite 2044

## Beschreibung

Die vorliegende Erfindung betrifft eine Vorrichtung zur Gewinnung von thermischer und/oder elektrischer Energie aus Sonnenlicht, mit mindestens einem Solarkollektor, der einen länglichen Absorber und einen den Absorber über seine Länge hinweg und umfänglich zumindest bereichsweise umschließenden, das Sonnenlicht optisch auf den Absorber konzentrierenden Energiekonzentrator aufweist.

Solarkollektoren mit optischen Energiekonzentratoren sind bekannt. Die bekannten Ausführungen beruhen entweder auf dem Prinzip einer Fresnel-Linse (s. hierzu beispielsweise die Druckschriften US-A-4 022 186, US-A-4 069 812 und US-A-4 337 759), einer Sammellinse oder einer Streulinse. Kollektoren, die nach dem Prinzip der Fresnel-Linse oder der Sammellinse aufgebaut sind, erreichen jedoch maximal einen Konzentrationsfaktor von 1:1,3 bis 1:1,5. Dieser Konzentrationsfaktor kann allenfalls dadurch erhöht werden, daß der Kollektor mechanisch dem Sonnenlauf nachgeführt wird, wie es in den genannten Druckschriften auch jeweils beschrieben ist. Dies ist jedoch konstruktiv außerordentlich aufwendig. Bei den Fresnel-Linsensystemen ist zudem nachteilig, daß alle einzelnen im Querschnitt etwa dreieckförmigen Stufenlinsen unterschiedlich so berechnet und gestaltet werden müssen, daß die gewünschte Punkt- bzw. Linienfokussierung erreicht wird. Streulinsen erreichen zwar einen etwas höheren Konzentrationsfaktor von etwa 1:1,9. Dieser Kollektorentyp hat aber den großen Nachteil einer sehr schwierigen und kostenaufwendigen Fertigung. Seine in rohraxialer Richtung aufgebauten Linsen weisen eine geringste Dicke von ca. 3 mm, aber eine größte Dicke von 10 mm auf. Dies bringt bei der Herstellung durch Extrudieren Materialspannungen durch unterschiedliches Abkühlen des transparenten Materials mit sich. Diese Materialspannungen sind nur schwierig zu beherrschen und führen zu einem überdurchschnittlich hohen Herstellungspreis.

Der vorliegenden Erfindung liegt die Aufgabe zugrunde, eine Vorrichtung der gattungsgemäßen Art zu schaffen, mit der auf besonders wirtschaftliche Weise ein höherer Konzentrationsfaktor und damit ein verbesserter Wirkungsgrad erreicht werden kann.

Erfindungsgemäß wird dies dadurch erreicht, daß der Energiekonzentrator zumindest in einem entsprechend dem täglichen Sonnenlauf mit Sonnenlicht bestrahlbaren Umfangsbereich eine aus einem transparenten Material bestehende Prismenanordnung mit einer Vielzahl von axial, parallel zum Absorber verlaufenden und umfänglich verteilt nebeneinander angeordneten Prismen aufweist, wobei alle Prismen einen gleichartigen und gleichschenkligen Querschnitt mit dem Absorber zugekehrten Spitzen aufweisen, wobei die Prismen durch die Spitzen verlaufende, ihren Prismenwinkel halbierende Achsen aufweisen, die im wesentlichen radial zur Mittelachse des Solarkollektors verlaufen, und wobei die Prismen als konvexprismatische Linsen mit dem Sonnenlicht zugewandten, konvex gekrümmten Außenflächen ausgebildet sind, wobei die Außenflächen jeweils von einer sich über den Bereich mehrerer oder aller Prismen erstreckenden, im Querschnitt kreisbogenförmigen Außenflächen des Energiekontzentrators gebildet sind, wobei durch die Geometrie der Prismen eine Flächenfokussierung des Sonnenlichtes derart erreicht wird, daß sich eine Fokussierungsfläche beim Sonnenlauf stets in einem zumindest anteilig den Bereich des Absorbers überdeckenden Bereich befindet.

Die erfindungsgemäße Prismenanordnung ist außerordentlich einfach und preiswert herstellbar, indem entweder transparentes, ursprünglich im wesentlichen flaches Film- bzw. Folienmaterial verwendet wird, welches auf einer Seite die Prismen und anderseitig eine ebene Oberfläche aufweist. Dieses Material braucht dann lediglich in eine Röhrenform oder zumindest in eine Röhrenschalenform (z.B. Halbschale) geformt zu werden. Aufgrund der besonderen, sehr einfachen Geometrie der erfindungsgemäßen Prismen ist vorteilhafterweise aber auch eine Herstellung des Energiekonzentrators als Kunststoff-Extrusionsteil möglich, was besonders wirtschaftlich ist.

Durch die Erfindung wird das Sonnenlicht über einen Sonnenlauf von mehr als 160° hinweg optimal ausgenutzt, d.h. nahezu vollständig auf den Absorber konzentriert. Dies kann vorteilhafterweise erreicht werden, ohne daß der Solarkollektor mechanisch dem Sonnenlauf nachgeführt werden müßte; vielmehr handelt es sich erfindungsgemäß um eine optisch einachsige Nachführung des Sonnenlaufs auf den Absorber. Dabei hat sich überraschenderweise gezeigt, daß auch ohne mechanische Nachführung ein sehr beachtlicher Konzentrationsfaktor von mehr als 1:2,5 erreicht werden kann. Der Erfindung liegt diesbezüglich die Erkenntnis zugrunde, daß bei den bekannten Fresnel-Linsensystemen aufgrund einer dort bewirkten, genau zu berechnenden Punkt- bzw. Linien-Fokussierung im Falle einer Sonnenbewegung ohne mechanische Nachführung sehr schnell die Fokussierung gänzlich aus dem Bereich des Absorbers "wegwandern" würde. Mit der erfindungsgemäßen Prismenanordnung wird aufgrund der besonderen, gleichschenkligen Geometrie der Prismen, wobei bevorzugt alle Prismen auch bezüglich ihrer Querschnittsform gleichartig ausgebildet sind, bewußt eine Flächenfokussierung bewirkt, so daß vorteilhafterweise beim Sonnenlauf die Fokussierungsfläche sich stets in einem zumindest anteilig den Bereich des Absorbers überdeckenden Bereich befindet. Dies bedeutet, daß durch eine gewollte "Reststreuung" die Strahlung auf einen Flächenbereich konzentriert wird, der sich dann bei der Sonnenbewegung nur vergleichsweise geringfügig relativ zum Absorber verlagert. Hierdurch ist vorteilhafterweise eine mechanische Nachführung des Systems entbehrlich. Ferner werden durch die erfindungsgemäße Ausgestaltung der Prismenanordnung Umkehr- bzw. Totalreflexionen nahezu vollständig vermieden, da eine solche Totalreflexion jeweils allenfalls im Bereich nur eines der Prismen auftreten kann. Dies führt zu einem vernachlässigbar geringen Energieverlust.

Weitere vorteilhafte Ausgestaltungsmerkmale der Erfindung und besondere Ausführungsformen sind in den Unteransprüchen sowie der folgenden Beschreibung von bevorzugten Ausführungs- und Anwendungsbeispielen enthalten.

Anhand der Zeichnung soll nun die Erfindung beispielhaft näher erläutert werden. Dabei zeigen:
- Fig. 1: in einer schematischen Stirnansicht den Aufbau eines erfindungsgemäßen Solarkollektors in einer ersten Ausführungform,
- Fig. 2: eine alternative Ausgestaltung des Energiekonzentrators in einer zu Fig. 1 analogen Darstellung,
- Fig. 3: eine Ansicht des Energiekonzentrators ähnlich Fig. 2, jedoch in einer weiteren Ausführungsvariante,
- Fig. 4: stark schematisch den Aufbau der Prismenanordnung bzw. eines zur Herstellung der Prismenanordnung verwendeten Film- bzw. Folienmaterials,
- Fig. 4a: einen Ausschnitt der Prismenanordnung zur Erläuterung des Strahlengangs bzw. der Konzentrationswirkung,
- Fig. 5: einen Teil-Axialschnitt in einem Endbereich des Solarkollektors mit Darstellung eines Teils eines Halterungselementes,
- Fig. 6: eine Perspektivansicht des Solarkollektors mit zwei endseitigen Halterungselementen,
- Fig. 7 bis 9: jeweils eine schematische Darstellung von möglichen Zusammenschaltungen mehrerer erfindungsgemäßer Solarkollektoren,
- Fig. 10: eine weitere, besondere vorteilhafte Ausführungsform des erfindungsgemäßen Energiekonzentrators in einer Ansicht analog zu Fig. 1 bis 3,
- Fig. 11: eine vergrößerte Darstellung des Bereichs XI in Fig. 10 und
- Fig. 12: eine stark schematische, d.h. nicht maßstabgerechte Prinzipdarstellung des Energiekonzentrators gemäß Fig.10 zur Erläuterung der Geometrie.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit dem entsprechenden Bezugszeichen ebenfalls zu erkennen ist.

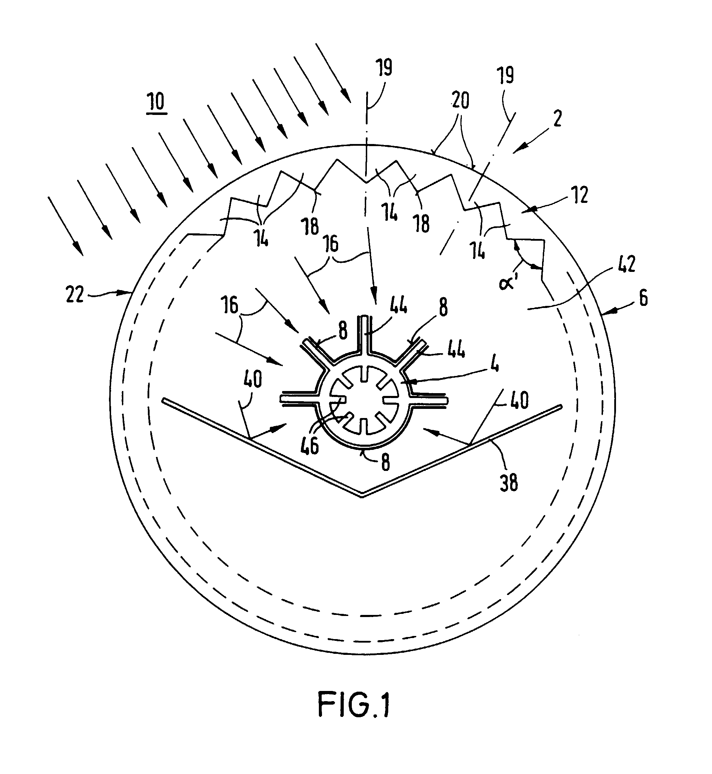

Wie sich zunächst aus Fig. 1 ergibt, weist ein erfindungsgemäßer Solarkollektor 2 einen länglichen, bevorzugt aus Aluminium bestehenden Absorber 4 und einen den Absorber 4 über seine Länge hinweg und umfänglich zumindest bereichsweise umschließenden Energiekonzentrator 6 auf, der das Sonnenlicht optisch auf den Absorber 4 konzentriert, d.h. umlenkt. Zur Gewinnung von thermischer Energie ist der Absorber 4 rohrförmig ausgebildet, so daß er von einem geeigneten, insbesondere metalldotierten Wärmetransportmedium durchströmbar ist. Der Absorber 4 überträgt die auf ihn abgestrahlte Energie als Wärme auf das Wärmetransportmedium. Dabei ist das Wärmetransportmedium bevorzugt mit sehr kleinen Kupfer-Partikeln dotiert sowie dabei insbesondere derart inhibiert, daß eine elektrisch leitende Brücke zum bevorzugt aus Aluminium bestehenden Absorber 4 vermieden wird. Diese Maßnahme bewirkt vor allem einen effektiveren Korrosionsschutz.

Zusätzlich oder aber alternativ kann der Absorber 4 zur Erzeugung von elektrischer bzw. photovoltaischer Energie außenseitig photovoltaische Elemente 8 aufweisen. Diese sind insbesondere als außenseitige, oberflächige Beschichtung aus einem entsprechenden Halbleitermaterial (z.B. AlGaAS) ausgebildet.

Erfindungsgemäß weist nun der Energiekonzentrator 6 zumindest in einem entsprechend dem täglichen Sonnenlauf mit Sonnenlicht (vgl. die Pfeile 10 in Fig. 1) bestrahlbaren Umfangsbereich eine aus einem transparenten ("glasklaren") Material bestehende Prismenanordnung 12 auf. Diese erfindungsgemäße Prismenanordnung 12 weist mindestens einen Umfangsbereich mit (rohr-)axial, parallel zum Absorber 4 verlaufenden und in Umfangsrichtung verteilt nebeneinander angeordneten Prismen 14 auf. Diese Prismen 14 bewirken ein Ablenken des Sonnenlichtes 10 derart, daß dieses auf den Absorber 4 konzentriert wird. Dies ist in Fig. 1 anhand von Pfeilen 16 angedeutet. Somit wirken die Prismen 14 als sogenannte Ablenkprismen, wobei erfindungsgemäß alle Prismen 14 gleichschenklig sowie vorzugsweise auch gleichartig ausgebildet sind. Damit sind vorzugsweise auch alle Prismenwinkel und alle Winkel zwischen jeweils benachbarten Prismenflächen gleich groß. Erfindungsgemäß sind dabei die Prismen 14 mit ihren Spitzen bzw. "brechenden Kanten" 18 dem Absorber 4 zugekehrt angeordnet, wobei die den Prismenwinkel halbierenden, durch die Spitzen 18 verlaufenden Achsen 19 im wesentlichen radial zur Mittelachse des Solarkollektors 2 verlaufen. Zudem ist es für einen besonders hohen Konzentrationsfaktor vorteilhaft,wenn die Prismen 14 auf ihren dem Sonnenlicht 10 zugewandten Seiten - im Querschnitt gesehen - konvex gekrümmte Außenflächen 20 aufweisen. Hierdurch sind "konvexprismatische Linsen" gebildet. Hierbei ist es insbesondere herstellungstechnisch besonders vorteilhaft, wenn die konvexen Außenflächen 20 der Prismen 14 von einer durchgehend konvexen, im Querschnitt insbesondere kreisbogenförmigen Außenfläche 22 des Energiekonzentrators 6 gebildet sind.

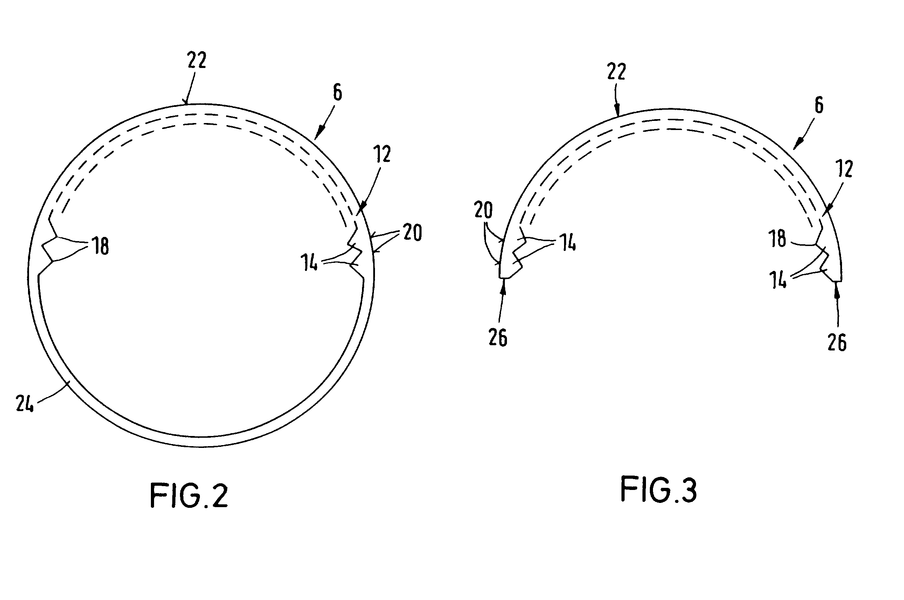

Vorzugsweise ist der Energiekonzentrator 6 mit einer den Absorber 4 insbesondere koaxial umschließenden Röhrenform ausgebildet. Dabei erstreckt sich die Prismenanordnung 12 entweder gemäß Fig. 1 über im wesentlichen den ganzen Röhrenumfang des Energiekonzentrators 6, oder aber gemäß Fig. 2 und 3 nur über einen insbesondere etwa halbschalenförmigen, d.h. sich etwa über 180° erstreckenden Teilbereich des Röhrenumfanges des Energiekonzentrators 6. Gemäß Fig. 2 ist dann der übrige, prismenfreie Teilbereich des Röhrenumfanges des Energiekonzentrators 6 als mit der Prismenanordnung 12 insbesondere einstückig verbundene Röhrenschale (Hohlzylindersektor) 24 ausgebildet. In der Ausführungsform nach Fig. 3 bildet die Prismenanordnung 12 lediglich eine Halbschale, wobei sich die Prismenanordnung 12 mit einem nicht dargestellten Gehäuseteil zu der Röhrenform ergänzt; dieses nicht dargestellte Gehäuseteil ist dann mit der Prismenanordnung 12 über geeignete,ebenfalls nicht dargestellte Verbindungsmittel verbunden, und zwar insbesondere derart, daß zwischen den Teilen im Bereich der seitlichen Endkanten 26 der halbschalenförmigen Prismenanordnung 12 eine Dichtigkeit gewährleistet ist. Der Zweck dieser Maßnahme wird im folgenden noch erläutert werden.

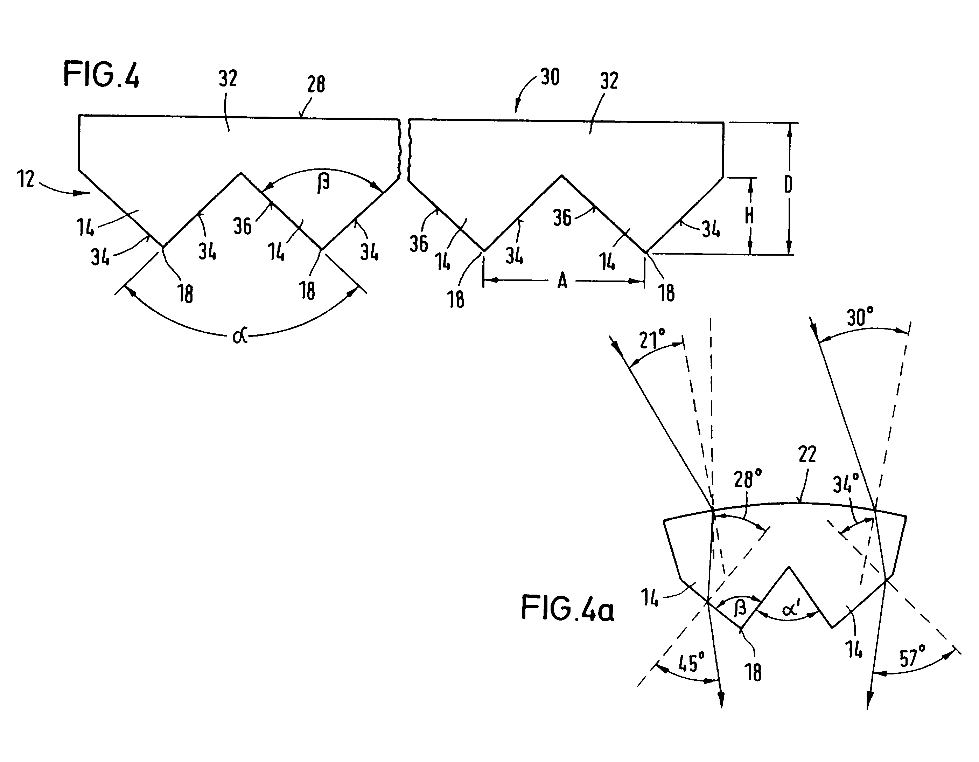

Wie sich nun aus Fig. 4 ergibt, kann die Prismenanordnung 12 mit Vorteil aus einem flexiblen, ursprünglich im wesentlichen flachen, d.h. einseitig eine ebene Oberfläche 28 und anderseitig die Prismen 14 aufweisenden Film- bzw. Folienmaterial 30 gebildet sein. Dieses Material 30 braucht dann vorteilhafterweise lediglich kreisbogenförmig bzw. zylinderschalenförmig verformt zu werden, wodurch dann aus der ebenen Oberfläche 28 die konvexe bzw. kreisbogenförmige Außenfläche 22 der Prismenanordnung 12 entsteht (vgl.Fig.4 mit Fig.4a sowie Fig.1). Dabei wird bei der Herstellung der Ausführungsform nach Fig. 1 mit dem Material 30 ein umfänglich geschlossener Hohlzylinder gebildet, wobei bevorzugt die aneinanderstoßenden Längsseitenkanten dicht miteinander verbunden werden, und zwar insbesondere stoffschlüssig, z.B. durch Kleben oder Verschweißen.

Wie sich nun ferner aus Fig. 4 ergibt, weist das bei der Ausführungsform gemäß Fig. 1 bis 3 bevorzugt für die Prismenanordnung 12 verwendete Material 30 eine Dicke D - gemessen von der äußeren Oberfläche 28 bis zu den Spitzen bzw. "brechenden Kanten" 18 - von mindestens 0,5 mm auf. Um eine bessere mechanische Stabilität zu erreichen, liegt die Dicke D aber vorzugsweise etwa im Bereich von 1,5 bis 2 mm. Dabei weisen die Prismen 14 - ausgehend von einer diese miteinander verbindenden Basis 32 - eine Höhe H etwa im Bereich von 0,15 bis 0,2 mm auf. Im "flachliegenden" Zustand des Materials 30 gemäß Fig. 4 weisen zudem die benachbarten Prismen 14 einen seitlichen Mittenabstand A (Abstand der Spitzen 18) voneinander auf, der etwa im Bereich von 0,3 bis 0,5 mm liegt. Zudem schließen die aneinandergrenzenden Prismenflächen 34, 36 zweier benachbarter Prismen 14 einen Winkel α ein, der im flachen Zustand nach Fig. 4 im Bereich von etwa 96° liegt. Wird dann das Material 30 in die bevorzugte Kreisbogenform bzw. Hohlzylinderschalenform des Energiekonzentrators 6 gebracht, verkleinert sich der Winkel α' (Fig. 4a) bis auf etwa 60° bis 80°, insbesondere etwa 70°. Damit ist der Winkel α' in dieser Ausführungsform kleiner/gleich 90°. Durch diese Verformung des Materials 30 verringert sich dann auch der oben angegebene Abstand A zwischen den Prismenspitzen 18 entsprechend. Der Prismenwinkel β beträgt bei dieser Ausführungsform etwa 90°.

In Fig. 4a sind beispielhaft zwei Strahlengänge eingezeichnet, wodurch erkennbar ist, daß das Licht nach innen auf den Absorber konzentriert wird.

Der gesamte Solarkollektor 2 weist bevorzugt eine Länge von etwa 1 m und einen Außendurchmesser von etwa 150 mm auf.

Gemäß Fig. 1 ist bevorzugt vorgesehen, auf der dem Sonnenlicht 10 bzw. der Prismenanordnung 12 abgekehrten Seite "unterhalb" des Absorbers 4 einen Reflektor 38 anzuordnen. Dieser Reflektor 38 erstreckt sich axial und parallel zum Absorber 4 durch den insbesondere röhrenförmigen Energiekonzentrator 6. Dabei kann der Reflektor 38 - wie dargestellt - im Querschnitt winkelförmig oder aber parabolisch ausgebildet sein. Der Reflektor 38 ist mit einem sehr hohen Reflexionsgrad von etwa 95% ausgebildet, was durch eine Hochglanzverspiegelung erreicht werden kann. Der Reflektor 38 dient damit zur Reflexion derjenigen Sonnenstrahlen, die zunächst an dem Absorber 4 vorbei verlaufen, so daß nach Reflexion durch den Reflektor 38 diese Strahlen doch den Absorber 4 treffen. Dies ist in Fig. 1 anhand von Pfeilen 40 angedeutet. Zudem bewirkt der Reflektor 38 vorteilhafterweise auch eine Reflexion von vom Absorber 4 ausgehender Wärmestrahlung zurück auf den Absorber 4.

Für den Wirkungsgrad des Solarkollektors 2 ist es vorteilhaft, wenn der Raum 42 zwischen dem Absorber 4 und dem optischen Energiekonzentrator 6 evakuiert bzw. evakuierbar ist. Dies ist der Grund dafür, daß - wie oben bereits angedeutet - der röhrenförmige Energiekonzentrator 6 umfangsgemäß dicht (gas- und feuchtigkeitsdicht) ausgebildet sein sollte. Zur Evakuierung des Raumes 42 wird dann eine nicht dargestellte Vakuumpumpe verwendet, die vorzugsweise zumindest anteilig von der durch die photovoltaischen Elemente 8 gewonnenen elektrischen Energie gespeist wird. Diese bevorzugte Art der Evakuierung hat den entscheidenden Vorteil, daß das Vakuum praktisch über die gesamte Lebensdauer des Solarkollektors 2 aufrechterhalten werden kann. Dabei erfolgt die Evakuierung praktisch nur bei Sonneneinstrahlung, was besonders wirtschaftlich ist, weil nur dann eine Evakuierung sinnvoll ist. Dies bedeutet, daß beispielsweise nachts eine Evakuierung gar nicht erforderlich ist.

Wie sich nun weiterhin aus Fig. 1 ergibt, weist der Absorber 4 vorzugsweise Außenrippen 44 zur Vergrößerung seiner Energie aufnehmenden Oberfläche auf, wodurch auch solche Sonnenstrahlen "aufgefangen" werden, die nicht ganz genau auf das Zentrum bzw. auf die Mantelfläche des rohrförmigen Absorbers 4 treffen. Vorzugsweise tragen dann diese Außenrippen 44 die photovoltaischen Elemente 8. Der Absorber 4 bildet somit auch eine Trägerkonstruktion mit guten statischen Eigenschaften. Es ist zudem vorteilhaft, wenn der rohrförmige Absorber 4 auch Innenrippen 46 zur Vergrößerung seiner Energie an das Wärmetransportmedium abgebenden Innenfläche aufweist. Die bessere thermische Energieabgabe an das Wärmetransportmedium wird durch entsprechende Vergrößerung der "Reynolds-Zahl" und der "Nusselt-zahl" erreicht.

Alternativ (oder auch zusätzlich) zu den Innenrippen 46 kann mit besonderem Vorteil für den Absorber 4 auch ein Wärmetauscherrohr verwendet werden, dessen Rohrwandung insbesondere im sogenannten "Verbeulungsverfahren", wie es z.B. in der DE-A-25 57 215 beschrieben ist, derart "reliefartig" strukturiert ist, daß sickenartig verformte, in einer insbesondere wabenartigen (z.B. vier- oder sechseckig), flächendeckenden Verteilung angeordnete Flächenzonen sich nach innen in den Rohr-Innenquerschnitt erstrecken. Zweckmäßigerweise erfolgt dies vom Rohr-Inneren her durch Vakuum-Beaufschlagung der Rohrwandung, wodurch diese zonal "nach innen gezogen" wird. Die Strukturierung kann aber auch durch Beaufschlagung von außen und beispielsweise mechanisch gebildet werden.

Diese Maßnahme der "zonalen Sickenverformungen" führt zu beachtlichen Vorteilen. So wurde festgestellt, daß durch die Strukturierung der Innenwandung eine erheblich verbesserte Wärmeübertragung zwischen dem Rohr und dem strömenden Wärmemedium erreicht wird, und diesbezüglich wurde erkannt, daß dies auf einer gesteigerten Tendenz des Mediums zur turbulenten Strömung beruht, d.h. durch die Strukturierung kann schon bei sehr geringer Pumpenleistung eine gute Verwirbelung des Wärmemediums erreicht werden, und zwar schon vor Erreichen der eigentlichen Reynoldszahl. Ferner wird auch eine sehr hohe mechanische Stabilität schon bei geringer Wandstärke erreicht, so daß der Absorber sehr dünnwandig mit nur der Hälfte oder sogar einem Drittel der bisher erforderlichen Wandstärke ausgebildet sein kann. Dies führt zu reduzierten Materialkosten. Bei dieser Ausführungsform werden dann bevorzugt die Enden des Absorbers zur mechanischen Halterung und zum Medium-dichten Anschluß eingegossen, was wegen der strukturierten, "unebenen" Oberfläche vorteilhaft ist.

Das beschriebene struktierte ("verbeulte") Wärmetauscherrohr kann mit Vorteil auch unabhängig von dem erfindungsgemäßen Solarkollektor für Temperierungszwecke allgemeiner Art, z.B. für Heiz- und/oder Kühlanlagen, verwendet werden.

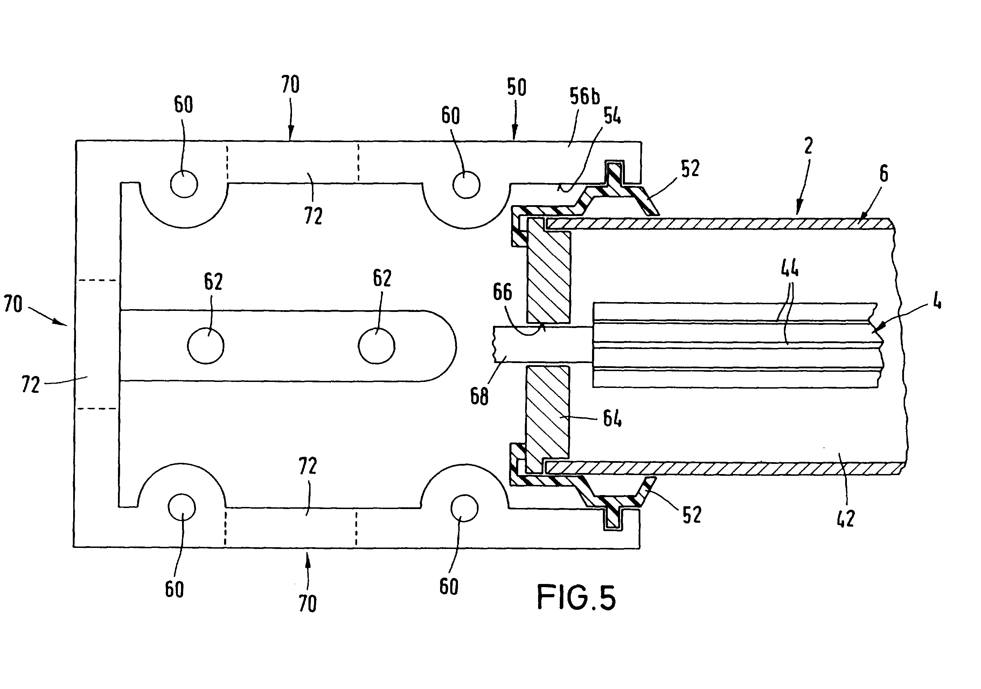

Wie sich nun aus Fig. 5 bis 9 ergibt, weist der Solarkollektor 2 beidendig jeweils ein Halterungselement 50 auf. Diese Halterungselemente 50 fixieren sowohl den inneren Absorber 4 als auch den äußeren Energiekonzentrator 6 - und gegebenenfalls auch den Reflektor 38. Zudem dienen die Halterungselemente 50 auch zur Montage des Solarkollektors 2 insbesondere im Bereich eines Gebäudedaches. In der dargestellten Ausführungsform ist vorgesehen,daß jedes Halterungselement 50 den röhrenförmigen Energiekonzentrator 6 endseitig dicht umschließt, und zwar insbesondere mit einem ringförmigen, elastischen Profildichtungselement 52 und/-oder durch Vergießen. Die dadurch erreichte Abdichtung dient dazu, in der oben beschriebenen Weise eine Evakuierung des Raumes 42 vornehmen zu können. Zudem haben die Dichtungselemente 52 die Aufgabe, auftretende Wärmeausdehnungen des Solarkollektors 2 aufzunehmen bzw. auszugleichen und so Materialspannungen zu vermeiden.

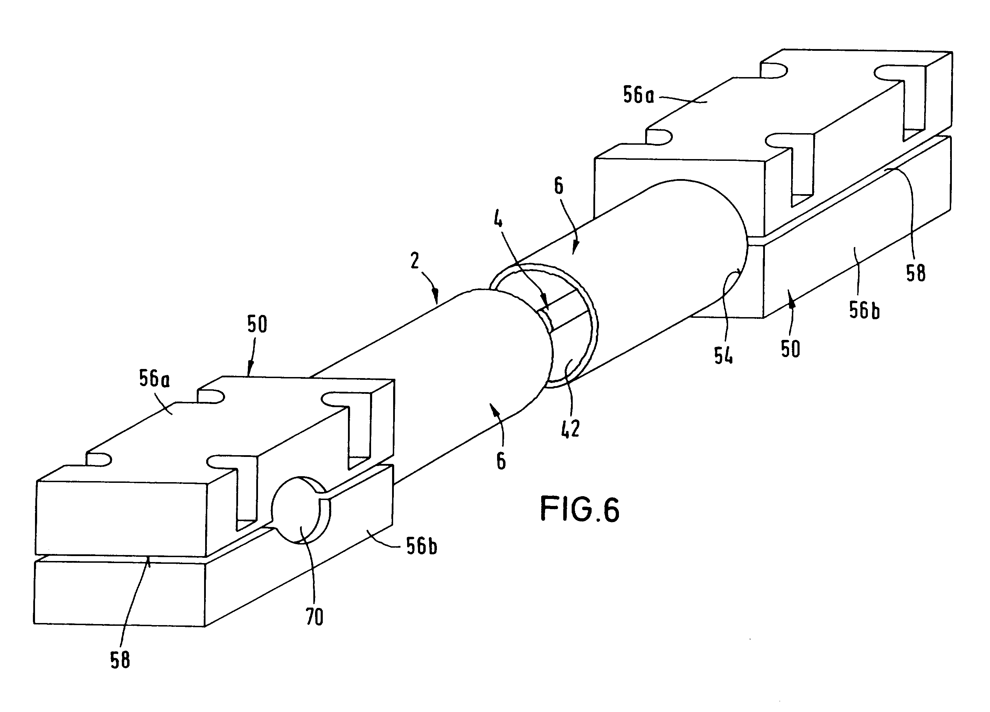

Gemäß Fig. 5 und 6 ist jedes Halteelement 50 gehäuseartig mit mindestens einer Aufnahmeöffnung 54 für ein Ende des Solarkollektors 2 ausgebildet, wobei in dieser Aufnahmeöffnung 54 das Dichtungselement 52 sitzt. Das gehäuseartige Halteelement 50 besteht zweckmäßigerweise aus zwei Gehäusehälften 56a und 56b mit einer von der Mittelachse des Solarkollektors 2 bestimmten Teilungsebene 58 (Fig. 6). Die Gehäusehälften 56a, b sind unter Einschluß des Solarkollektor-Endes fest miteinander verbindbar (verspannbar), und zwar vorzugsweise lösbar über Schraubverbindungen. Hierzu weist die eine, "untere" Gehäusehälfte 56b (siehe Fig. 5) insbesondere Sacklöcher 60 auf, in die nicht dargestellte, vorzugsweise selbstschneidende Schrauben, die Durchgangslöcher der anderen, "oberen" Gehäusehälfte 56a durchgreifen, einschraubbar sind. Zudem weist zumindest die eine Gehäusehälfte 56b Befestigungslöcher 62 auf, durch die zur Befestigung des Halterungselementes 50 einem dachseitigen, nicht dargestellten Halter entsprechende Schrauben geführt werden können.

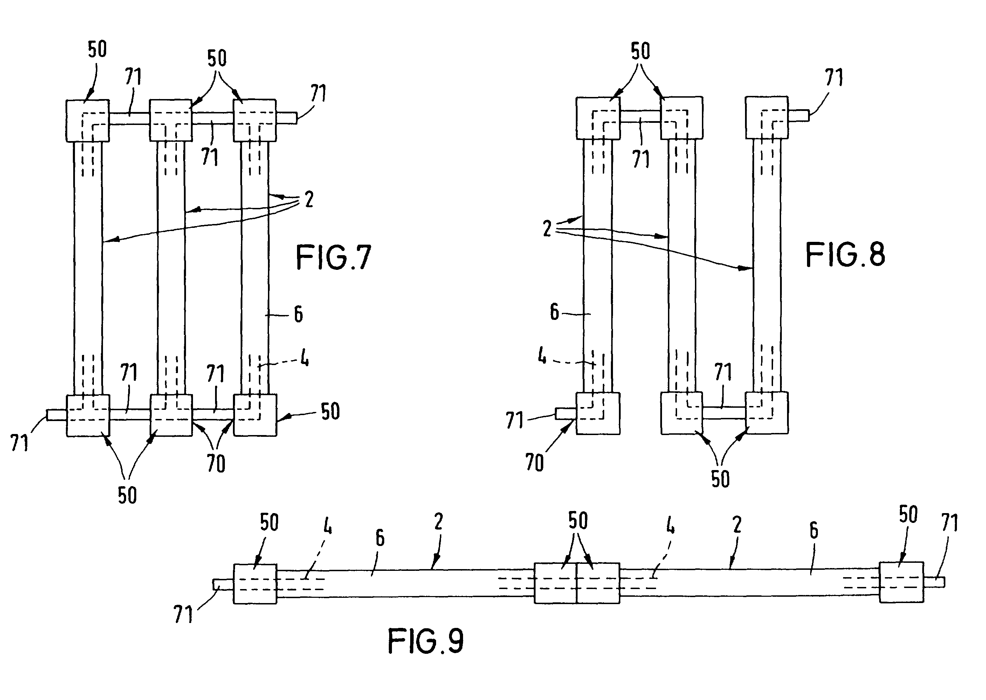

Gemäß Fig. 5 ist jedes Ende des röhrenförmigen Energiekonzentrators 6 mit einem teller- bzw. stopfenartigen Führungselement 64 verschlossen,wobei mit dem Dichtungselement 52 auch der Ringspalt zwischen dem Energiekonzentrator 6 und dem Führungselement 64 abgedichtet ist. Jedes Führungselement 64 besitzt eine zentrische Öffnung 66 zum Durchführen eines endseitigen Rohrstückes 68 des Absorbers 4. Hierdurch ist der Absorber 4 zentrisch bzw. koaxial innerhalb des Energiekonzentrators 6 fixiert. Außerdem weist jedes Halterungselement 50 mindestens einen in den rohrförmigen Absorber 4 bzw. in das Rohrstück 68 übergehenden Anschluß 70 für eine Verbindungsleitung 71 (Zu- bzw. Ableitung; vgl. hierzu Fig. 7 bis 9) für das Wärmetransportmedium auf. Hierbei ist es vorteilhaft, wenn die Gehäusehälften 56a, b zur Bildung dieser Anschlüsse 70 jeweils herausbrechbare Zonen 72 aufweisen, was durch die Bildung von entsprechenden "Sollbruchstellen" erreicht werden kann.

Diese beschriebene, bevorzugte Ausführung ermöglicht eine sehr einfache und kostengünstige Montage. Hierzu werden lediglich der Absorber 4 und gegebenenfalls der Reflektor 38 in den röhrenförmigen Energiekonzentrator 6 eingeführt, und die Fixierung erfolgt dann über die Führungselemente 64. Die so gebildete Solarkollektor-Einheit 2 wird dann endseitig mit den Halterungselementen 50 versehen. Hierbei ist es vorteilhaft, wenn die Führungselemente 64 aus einem Material mit geringer Wärmeleitfähigkeit bestehen, da hierdurch Wärmebrücken zwischen dem Absorber 4 und den Halterungselementen 50 vermieden werden.

Gemäß Fig. 7 bis 9 können mehrere erfindungsgemäße Solarkollektoren 2 in praktisch beliebiger Weise zusammengeschaltet werden. So ist in Fig. 7 beispielhaft eine Parallelschaltung veranschaulicht. Fig. 8 zeigt demgegenüber eine Reihenschaltung von mehreren Solarkollektoren 2. In diesem Beispiel nach Fig. 8 sind die Solarkollektoren 2 aber räumlich parallel zueinander angeordnet, so daß insgesamt ein "mäanderförmiger" Verlauf erreicht wird. Demgegenüber ist in Fig. 9 eine andere Art der Reihenschaltung veranschaulicht. Hier sind zwei (oder mehrere) Solarkollektoren 2 koaxial hintereinander angeordnet. Selbstverständlich können auch Anordnungen als Kombinationen der in Fig. 7 bis 9 veranschaulichten Schaltungsvarianten vorgesehen sein.

Die erfindungsgemäßen Solarkollektoren 2 sind außerordentlich einfach und mit geringem Aufwand sowie auch in individueller Anpassung an den jeweiligen Montageort, z.B. an Dachformen, Brüstungen, Geländer, Dach(first)kanten usw., montierbar, wozu nicht zuletzt auch ein sehr geringes Gewicht beiträgt. Daher kann in der Regel zur Montage auf einen Kran oder dergleichen verzichtet werden.

Bei dem erfindungsgemäßen Solarkollektor handelt es sich um einen "Hochleistungskollektor". Bezogen auf eine meteorologische mittlere horizontale Sonneneinstrahlung von ca. 3 kwh/d wird bei einer physikalischen Fläche von ca. 1 m² mit sieben Kollektoren 2 eine thermische Leistung von 6 kwh/d und gegebenenfalls zusätzlich eine photovoltaische Energie von etwa 1,1 kwh/d erreicht (gemessene Werte).

Es soll nun noch eine vorteilhafte Weiterbildung der Erfindung erläutert werden. Dabei handelt es sich darum, daß der Energiekonzentrator 6 zumindest im Bereich der Prismenanordnung 12 eine außenseitige, oberflächige Beschichtung (in der Zeichnung nicht erkennbar) insbesondere zur Verringerung der Oberflächen-Verschmutzung aufweist. Diese Oberflächen-Beschichtung besteht vorzugsweise aus transparenten Keramik-Partikeln mit einer im Nanometer-Bereich liegenden Größe (sog. "Nanokristalle"). Hierdurch entsteht eine extrem glatte, schmutzabweisende und auch mechanisch sehr (kratz-)feste Oberfläche, durch die auch eine elektrostatische Aufladung vermieden wird. Die Schmutz-Haftung wird wesentlich reduziert. Die Beschichtung kann aufgesprüht und/oder aufgewalzt werden. Durch diese vorteilhafte Maßnahme läßt sich die Oberflächen-Verschmutzung auf nur noch etwa 5% der "normalerweise" auftretenden Verschmutzung reduzieren, und dies vorteilhafterweise ohne jegliche Beeinträchtigung der optischen Eigenschaften des Energiekonzentrators 6. Gleichzeitig wird auch ein mechanischer Oberflächenschutz erreicht.

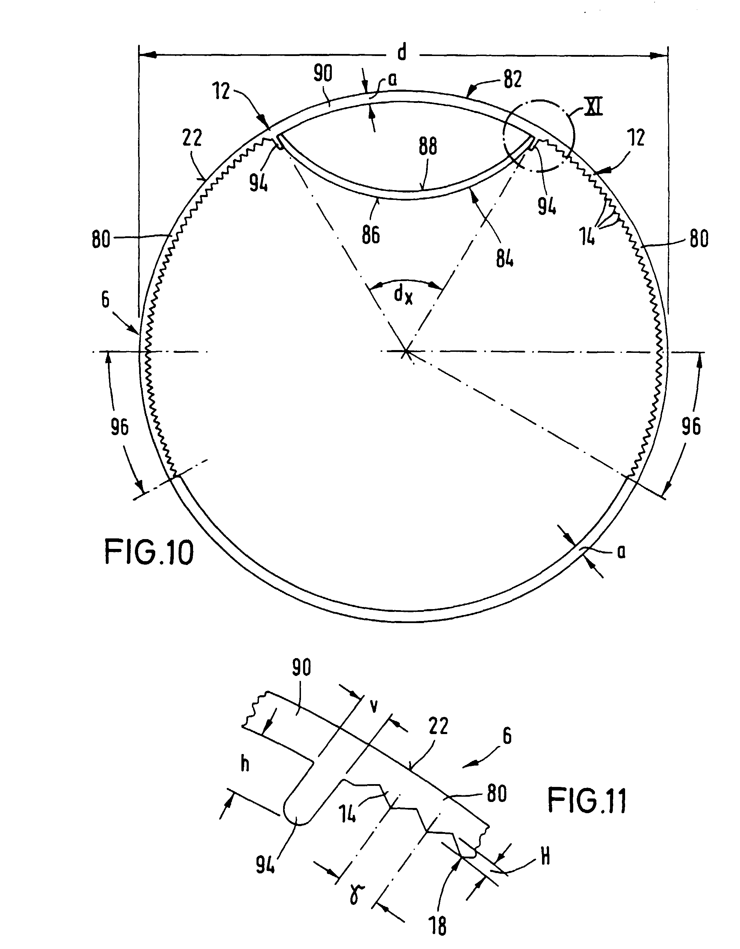

Es soll nun anhand der Fig. 10 bis 12 eine weitere, besonders vorteilhafte Ausführungsform des erfindungsgemäßen Energiekonzentrators 6 erläutert werden. Dabei weist die Prismenanordnung 12 eine insbesondere symmetrisch zwischen zwei Prismenzonen 80 angeordnete, insbesondere prismenfreie Linsenzone 82 auf, in deren Bereich ein Linsenelement 84 angeordnet ist. Dieses Linsenelement 84 ist als langgestreckte, parallel zu den Prismen 14 und damit parallel zur Längserstreckung des Energiekonzentrators 6 verlaufende konvex/konkav-Linse ausgebildet, wobei sie sich mit ihrer konvex/konkaven Krümmung nach innen in den Energiekonzentrator 6 und somit radial in Richtung des Absorbers 4 erstreckt. Dabei sind eine konvexe Linsenfläche 86 dem Absorber 4 zugekehrt und eine gegenüberliegende konkave Linsenfläche 88 vom Absorber 4 abgekehrt. Vorzugsweise sind hierbei die beiden Prismenzonen 80 über einen den Kreisbogen bzw. Zylindermantel fortsetzenden, prismenfreien Verbindungsabschnitt 90 einstückig miteinander verbunden.

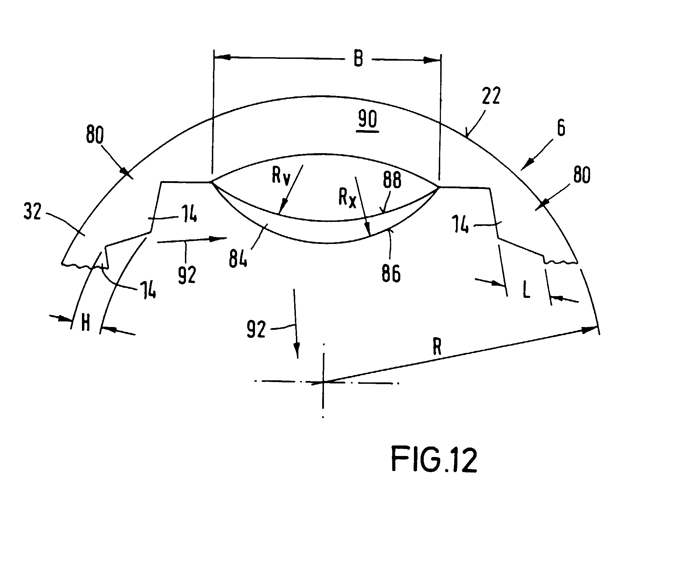

Das Linsenelement 84 dient dazu, auch solche Lichtstrahlen, die von den Prismen 14 quer, als eigentlich "am Absorber 4 vorbei laufende" Sekanten abgelenkt werden, nach innen zum Absorber 4 umzulenken. Dies ist in Fig. 12 anhand von Pfeilen 92 angedeutet.

Das Linsenelement 84 ist bevorzugt als gesondertes Teil hergestellt, z.B. extrudiert, und mit dem übrigen, vorzugsweise ebenfalls extrudierten, i.w. rohrförmigen Teil verbunden. Hierzu weist der rohrförmige Teil des Energiekonzentrators 6 vorzugsweise zwei etwa radial nach innen ragende, in Längsrichtung verlaufende Haltestege 94 auf, zwischen denen das Linsenelement 84 kraft- und/oder formschlüssig gehalten ist, indem es z.B. in axialer Richtung zwischen die Haltestege 94 eingeschoben oder aber durch elastische Verformung in radialer Richtung eingesetzt wird.

Im folgenden soll insbesondere anhand der Fig. 12 die besondere Geometrie des Energiekonzentrators dieser Ausführungsform nach Fig. 10 erläutert werden. Die Prismen 14 weisen eine in radialer Richtung gemessene Prismenhöhe H und eine Prismenschenkellänge L auf, wobei diese Maße in einem bestimmten Verhältnis zueinander sowie zum Außendurchmesser d = 2R (2 x Radius R) stehen, und zwar verhalten sich H : L : d wie 1 : etwa 2 : etwa 100. Besonders vorteilhaft für die Höhe des Konzentrationsfaktors ist das Verhältnis H : L : d = 1 : 1,98 : 100,83.

Bezüglich der Auslegung des Linsenelementes 84 sei B die Breite des Linsenelementes, Rᵥ der Krümmungsradius der konkaven Linsenfläche 88 und Rₓ der Krümmungsradius der konvexen Linsenfläche 86. Es gilt dann im Verhältnis zur Prismenhöhe H die Beziehung H : B : Rᵥ : Rₓ = 1 : etwa 95 bis 100 : etwa 60 bis 65 : etwa 60 bis 62, insbesondere 1 : 97 : 63,33 : 60,83.

Damit ergibt sich ein Winkelabstand γ der einzelnen Prismen 14 voneinander von etwa 2° (s. Fig. 11).

In einer realisierten Ausführungsform weisen die Haltestege 94 gemäß Fig. 11 eine Höhe h von etwa 3 mm, eine Breite v von etwa 1,5 mm sowie einen Winkelabstand αₓ (Fig. 10) voneinander von etwa 60° auf, so daß sich das Linsenelement 84 ebenfalls bevorzugt über diesen Umfangsbereich αₓ erstreckt. Damit ergibt sich eine Linsenbreite B von etwa 55 bis 60mm, insbesondere etwa 58,2 mm. Der Radius Rᵥ beträgt etwa 38 mm, und Rₓ ist etwa gleich 36,5 mm. Die größte Dicke des Linsenelementes 84 beträgt dabei etwa 2 mm in radialer Richtung des Energiekonzentrators 6. Die Dicke a des Energiekonzentrators 6 in den prismenfreien Bereichen beträgt etwa 2 mm.

In einer besonders vorteilhaften Ausgestaltung der Erfindung ist vorgesehen, daß sich die Prismenanordnung 12 bzw. die beiden Prismenzonen 80 in beiden Umfangsrichtungen über einen Halbkreis von 180° hinaus erstrecken, und zwar mit Erweiterungsabschnitten 96 von z.B. etwa 30°. Dies ist insofern von Vorteil, als bei der Montage der Solarkollektor 2 bzw. der Energiekonzentrator 6 mit seinem Linsenelement 84 durch Drehung um die Längsachse optimal zum jeweiligen Sonnenlauf, der ja je nach geographischer Lage unterschiedlich ist, ausgerichtet werden kann, dabei aber in jedem Fall noch in den seitlichen Endbereichen des "oberen Halbkreises" Prismen 14 angeordnet sind. Dies bedeutet, daß der Energiekonzentrator 6 ausgehend von der in Fig. 10 dargestellten Mittelstellung in beiden Richtungen zumindest um die Winkelerstreckung des Erweiterungsabschnittes 96 verdreht werden kann. Dies ist vor allem von Bedeutung bei einer Mehrfachanordnung mehrerer paralleler Solarkollektoren 2 (vgl. Fig. 7 und 8), da diese dann zur optimalen Ausnutzung der Sonnenenergie bzw. zur optimalen Energieverteilung über den Tag hinweg in an den Sonnenlauf angepaßten, insbesondere jeweils unterschiedlichen Drehstellungen montiert werden können, ohne daß hierfür unterschiedliche Ausführungsformen notwendig wären. Vielmehr kann ein einheitlich ausgebildeter Energiekonzentrator 6 hergestellt und für alle unterschiedlichen Ausrichtungen verwendet werden. Dies ist natürlich besonders wirtschaftlich.

## Patentansprüche

1. Vorrichtung zur Gewinnung von thermischer und/oder elektrischer Energie aus Sonnenlicht, mit mindestens einem Solarkollektor (2), der einen Absorber (4) und einen den Absorber (4) über seine Länge hinweg und umfänglich zumindest bereichsweise umschließenden, das Sonnenlicht optisch auf den Absorber (4) konzentrierenden Energiekonzentrator (6) aufweist,
**dadurch gekennzeichnet,** daß der Energiekonzentrator (6) zumindest in einem entsprechend dem täglichen Sonnenlauf mit Sonnenlicht bestrahlbaren Umfangsbereich eine aus einem transparenten Material bestehende Prismenanordnung (12) mit einer Vielzahl von axial, parallel zum Absorber (4) verlaufenden und umfänglich verteilt nebeneinander angeordneten Prismen (14) aufweist, wobei alle Prismen (14) einen gleichartigen und gleichschenkligen Querschnitt mit dem Absorber (4) zugekehrten Spitzen (18) aufweisen, wobei die Prismen (14) durch die Spitzen (18) verlaufende, ihren Prismenwinkel (β) halbierende Achsen (19) aufweisen, die im wesentlichen radial zur Mittelachse des Solarkollektors (2) verlaufen, und wobei die Prismen (14) als konvexprismatische Linsen mit dem Sonnenlicht zugewandten, konvex gekrümmten Außenflächen (20) ausgebildet sind, wobei die Außenflächen (20) jeweils von einer sich über den Bereich mehrerer oder aller Prismen (14) erstreckenden, im Querschnitt kreisbogenförmigen Außenfläche (22) des Energiekontzentrators (6) gebildet sind, wobei durch die Geometrie der Prismen (14) eine Flächenfokussierung des Sonnenlichtes derart erreicht wird, daß sich eine Fokussierungsfläche beim Sonnenlauf stets in einem zumindest anteilig den Bereich des Absorbers (4) überdeckenden Bereich befindet.

2. Vorrichtung nach Anspruch 1,
**dadurch gekennzeichnet,** daß der Energiekonzentrator (6) eine den Absorber (4) koaxial umschließende Röhrenform aufweist.

3. Vorrichtung nach Anspruch 1 oder 2,
**dadurch gekennzeichnet,** daß sich die Prismenanordnung (12) über im wesentlichen den ganzen Umfang des Energiekonzentrators (6) erstreckt.

4. Vorrichtung nach Anspruch 1 oder 2,
**dadurch gekennzeichnet,** daß sich die Prismenanordnung (12) nur über einen etwa halbschalenförmigen Teilbereich des Umfanges des Energiekonzentrators (6) erstreckt.

5. Vorrichtung nach Anspruch 4,
**dadurch gekennzeichnet,** daß der übrige, außerhalb der Prismenanordnung (12) liegende Teilbereich des Röhrenumfanges des Energiekonzentrators (6) entweder als mit der Prismenanordnung (12) einstückig verbundene Röhrenschale (24) oder als mit der Prismenanordnung (12) über Verbindungsmittel verbundenes Gehäuseteil ausgebildet ist.

6. Vorrichtung nach einem oder mehreren der Ansprüche 1 bis 5,
**dadurch gekennzeichnet,** daß im Bereich der Prismenanordnung (12) mindestens eine prismenfreie Linsen-Zone (82) mit einem langgestreckten, zu den Prismen (14) parallel verlaufenden, im Querschnitt konvex/konkav ausgebildeten Linsenelement (84) derart gebildet ist, daß von den Prismen (14) quer, mit sekantenartigem Verlauf abgelenkte Lichtstrahlen (92) auf das Linsenelement (84) treffen und von diesem zu dem Absorber (4) umgelenkt werden.

7. Vorrichtung nach einem oder mehreren der Ansprüche 1 bis 6,
**dadurch gekennzeichnet,** daß die Prismenanordnung (12) im Bereich der Prismen (14) aus einem flexiblen, ursprünglich flachen, einseitig eine ebene Oberfläche (28) und anderseitig die Prismen (14) aufweisenden Film- bzw. Folienmaterial (30) gebildet ist, indem dieses Material (30) in eine Zylinder- oder Zylindersektorform gebogen wird.

8. Vorrichtung nach einem oder mehreren der Ansprüche 1 bis 6,
**dadurch gekennzeichnet,** daß der Energiekonzentrator (6) als Extrusionsteil aus einem glasklaren Kunststoff gebildet ist, wobei vorzugsweise das Linsenelement (84) als gesondertes Teil hergestellt und mit dem übrigen Teil kraft- und/oder formschlüssig und/oder stoffschlüssig verbunden ist.

9. Vorrichtung nach einem oder mehreren der Ansprüche 1 bis 8,
**dadurch gekennzeichnet,** daß das die Prismenanordnung (12) bildende Material (30) im Bereich der Prismen (14) eine Dicke (D) - gemessen von der äußeren Oberfläche (28) bis zu den Spitzen (18) - von mindestens 0,5 mm, vorzugsweise aber etwa im Bereich von 1,5 bis 2 mm, aufweist.

10. Vorrichtung nach einem oder mehreren der Ansprüche 1 bis 9,
**dadurch gekennzeichnet,** daß die Prismen (14) ausgehend von einer Basis (32) eine radial gemessene Prismenhöhe (H) aufweisen, die sich zur Prismenschenkellänge (L) und zum Außendurchmesser (d) des Energiekonzentrators (6) wie 1 : etwa 2 : etwa 100, insbesondere wie 1 : 1,98 : 100,83, verhält.

11. Vorrichtung nach einem oder mehreren der Ansprüche 1 bis 10,
**dadurch gekennzeichnet,** daß sich die Prismenhöhe (H) zur Breite (B) des Linsenelementes (84) und zum Krümmungsradius (Rᵥ) der konkaven Linsenfläche (88) sowie zum Krümmungsradius (Rₓ) der konvexen Linsenfläche (86) wie
1: etwa 100 : etwa 63 : etwa 60 bis 61, insbesondere wie 1 : 97 : 63,33 : 60,83, verhält.

12. Vorrichtung nach einem oder mehreren der Ansprüche 1 bis 11,
**dadurch gekennzeichnet,** daß die Prismen (14) ausgehend von einer Basis (32) eine Höhe (H) etwa im Bereich von 0,15 bis 0,8 mm, insbesondere etwa 0,6 mm, aufweisen.

13. Vorrichtung nach einem oder mehreren der Ansprüche 1 bis 12,
**dadurch gekennzeichnet,** daß die benachbarten Prismen (14) einen seitlichen Mittenabstand (A) voneinander aufweisen, der etwa im Bereich von 0,3 bis 0,5 mm bzw. im Bereich eines Winkelabstandes von etwa 2° liegt.

14. Vorrichtung nach einem oder mehreren der Ansprüche 1 bis 13,
**dadurch gekennzeichnet,** daß die aneinandergrenzenden Prismenflächen (34, 36) zweier benachbarter Prismen (14) einen Winkel (α') einschließen, der kleiner/gleich 90° oder größer/gleich 90° ist.

15. Vorrichtung insbesondere nach einem oder mehreren der Ansprüche 1 bis 14,
**dadurch gekennzeichnet,** daß der Absorber (4) rohrförmig und von einem Wärmetransportmedium durchströmbar ausgebildet ist.

16. Vorrichtung nach einem oder mehreren der Ansprüche 1 bis 15,
**dadurch gekennzeichnet,** daß der Absorber (4) außenseitig photovoltaische Elemente (8) aufweist.

17. Vorrichtung nach einem oder mehreren der Ansprüche 1 bis 16,
**dadurch gekennzeichnet,** daß auf der dem Sonnenlicht abgekehrten Seite des Absorbers (4) ein Reflektor (38) angeordnet ist.

18. Vorrichtung nach einem oder mehreren der Ansprüche 1 bis 17,
**dadurch gekennzeichnet,** daß der Raum (42) zwischen dem Absorber (4) und dem optischen Energiekonzentrator (6) evakuiert bzw.evakuierbar ist.

19. Vorrichtung nach einem oder mehreren der Ansprüche 1 bis 18,
**gekennzeichnet durch** eine zumindest anteilig von den photovaltaischen Elementen (8) gespeiste Vakuumpumpe.

20. Vorrichtung nach einem oder mehreren der Ansprüche 1 bis 19,
**dadurch gekennzeichnet,** daß der Absorber (4) Außenrippen (44) zur Vergrößerung seiner Energie aufnehmenden Oberfläche aufweist.

21. Vorrichtung nach einem oder mehreren der Ansprüche 1 bis 20,
**dadurch gekennzeichnet,** daß der rohrförmige Absorber (4) Innenrippen (46) zur Vergrößerung seiner Energie an das Wärmetransportmedium abgebenden Innenfläche aufweist.

22. Vorrichtung nach einem oder mehreren der Ansprüche 1 bis 21,
**dadurch gekennzeichnet,** daß der rohrförmige Absorber (4) eine in einem an sich bekannten Verbeulungsverfahrens strukturierte Rohrwandung mit radial nach innen ragenden, sickenartig verformten, über die Rohrwandung verteilten Flächenzonen aufweist.

23. Vorrichtung nach einem oder mehreren der Ansprüche 1 bis 22,
**dadurch gekennzeichnet,** daß der Solarkollektor (2) beidendig jeweils ein Halterungselement (50) aufweist, wobei die Halterungselemente (50) vorzugsweise sowohl den inneren Absorber (4) als auch den äußeren Energiekonzentrator (6) als auch gegebenenfalls den Reflektor (38) fixieren.

24. Vorrichtung nach einem oder mehreren der Ansprüche 1 bis 23,
**dadurch gekennzeichnet,** daß jedes Halterungselement (50) den röhrenförmigen Energiekonzentrator (6) endseitig dicht, insbesondere mit einem elastischen Dichtungselement (52) umschließt.

25. Vorrichtung nach Anspruch 23 oder 24,
**dadurch gekennzeichnet,** daß jedes Halterungselement (50) mindestens einen in den rohrförmigen Absorber (4) übergehenden Anschluß (70) für eine Verbindungsleitung (71) für das Wärmetransportmedium aufweist.

26. Vorrichtung nach einem oder mehreren der Ansprüche 1 bis 25,
**dadurch gekennzeichnet,** daß der Absorber (4) aus Aluminium besteht.

27. Vorrichtung nach einem oder mehreren der Ansprüche 17 bis 26,
**dadurch gekennzeichnet,** daß das Wärmetransportmedium metalldotiert, insbesondere kupferdotiert, und dabei vorzugsweise derart inhibiert ist, daß eine elektrische Verbindung zum Absorber (4) vermieden wird.

28. Vorrichtung nach einem oder mehreren der Ansprüche 1 bis 27,
**dadurch gekennzeichnet,** daß der Energiekonzentrator (6) zumindest im Bereich der Prismenanordnung (12) und gegebenenfalls von deren Linsenelement (84) außenseitig eine oberflächige, schmutzabweisende, transparente Beschichtung aufweist, die insbesondere aus keramischen Kleinstpartikeln gebildet ist.

## Claims

1. Device for obtaining thermal and/or electric energy from sunlight, having at least one solar collector (2) which has an absorber (4) and an energy concentrator (6) which surrounds the absorber (4) over its length and at least partially circumferentially and concentrates the sunlight optically onto the absorber (4), characterized in that, at least in a circumferential region which can be irradiated with sunlight in accordance with the diumal solar path, the energy concentrator (6) has a prism arrangement (12) consisting of a transparent material and having a multiplicity of prisms (14) extending axially parallel to the absorber (4) and arranged next to one another in a circumferentially distributed fashion, all the prisms (14) having a similar and isosceles cross-section with tips (18) facing the absorber (4), the prisms (14) having axes (19) which extend through the tips (18), bisect their prism angles (β) and extend essentially radially relative to the central axis of the solar collector (2), and the prisms (14) being constructed as convex prismatic lenses with convexly curved outer surfaces (20) facing the sunlight, the outer surfaces (20) being formed by an outer surface (22) of the energy concentrator (6) which has a cross-section in the shape of a circular arc and extends over the region of a plurality of or all the prisms (14), the geometry of the prisms (14) producing a surface focusing of the sunlight in such a way that as the sun moves a focusing surface is always located in a region which covers the region of the absorber (4) at least proportionately.

2. Device according to Claim 1, characterized in that the energy concentrator (6) has a tubular shape coaxially surrounding the absorber (4).

3. Device according to Claim 1 or 2, characterized in that the prism arrangement (12) extends over essentially the entire circumference of the energy concentrator (6).

4. Device according to Claim 1 or 2, characterized in that the prism arrangement (12) extends only over a subregion, approximately in the shape of a half shell, of the circumference of the energy concentrator (6).

5. Device according to Claim 4, characterized in that the remaining subregion, situated outside the prism arrangement (12), of the tubular circumference of the energy concentrator (6) is constructed either as a tubular shell (24) connected to the prism arrangement (12) in one piece or as a housing part connected to the prism arrangement (12) via connecting means.

6. Device according to one or more of Claims 1 to 5, characterized in that at least one prism-free lens zone (82) with an elongated lens element (84) extending parallel to the prisms (14) and constructed with a convex/concave cross-section is formed in the region of the prism arrangement (12) in such a way that light beams (92) deflected by the prisms (14) in a transverse fashion with a secant-like course strike the lens element (84) and are deflected by the latter to the absorber (4).

7. Device according to one or more of Claims 1 to 6, characterized in that the prism arrangement (12) is formed in the region of the prisms (14) from a flexible, initially flat film or foil material (30) which on one side has a plane surface (28) and on the other side has the prisms (14), by virtue of the fact that this material (30) is bent into the shape of a cylinder or cylinder sector.

8. Device according to one or more of Claims 1 to 6, characterized in that the energy concentrator (6) is formed as an extruded part from a glass-clear plastic, it being preferable for the lens element (84) to be produced as a separate part and to be joined to the remaining part in a force-closed and/or self-closed fashion and/or by bonding.

9. Device according to one or more of Claims 1 to 8, characterized in that in the region of the prisms (14) the material (30) forming the prism arrangement (12) has a thickness (D) - measured from the outer surface (28) up to the tips (18) - of at least 0.5 mm, but preferably approximately in the range from 1.5 to 2 mm.

10. Device according to one or more of Claims 1 to 9, characterized in that starting from a base (32) the prisms (14) have a radially measured prism height (H) which is to the prism limb length (L) and to the outside diameter (D) of the energy concentrator (6) as 1: approximately 2: approximately 100, in particular as 1: 1.98: 100.83.

11. Device according to one or more of Claims 1 to 10, characterized in that the prism height (H) is to the width (B) of the lens element (84) and to the radius of curvature (Rᵥ) of the concave lens surface (88) as well as to the radius of curvature (Rₓ) of the convex lens surface (86) as 1: approximately 100: approximately 63: approximately 60 to 61, in particular as 1: 97: 63.33: 60.83.

12. Device according to one or more of Claims 1 to 11, characterized in that starting from a base (32) the prisms (14) have a height (H) approximately in the range from 0.15 to 0.8 mm, in particular approximately 0.6 mm.

13. Device according to one or more of Claims 1 to 12, characterized in that the neighbouring prisms (14) have a neutral lateral centre spacing (A) which is approximately in the range from 0.3 to 0.5 mm or in the range of an angular spacing of approximately 2°.

14. Device according to one or more of Claims 1 to 13, characterized in that the mutually adjoining prism surfaces (34, 36) of two neighbouring prisms (14) enclose an angle (α') which is less than/equal to 90° or greater than/equal to 90°.

15. Device, in particular according to one or more of Claims 1 to 14, characterized in that the absorber (4) is constructed in the shape of a tube and such that a heat transfer medium can flow through it.

16. Device according to one or more of Claims 1 to 15, characterized in that the absorber (4) has photovoltaic elements (8) on the outside.

17. Device according to one or more of Claims 1 to 16, characterized in that a reflector (38) is arranged on the side of the absorber (4) averted from the sunlight.

18. Device according to one or more of Claims 1 to 17, characterized in that the space (42) between the absorber (4) and the optical energy concentrator (6) is evacuated or can be evacuated.

19. Device according to one or more of Claims 1 to 18, characterized by a vacuum pump which is fed at least proportionately by the photovoltaic elements (8).

20. Device according to one or more of Claims 1 to 19, characterized in that the absorber (4) has outer ribs (44) for enlarging its surface which absorbs energy.

21. Device according to one or more of Claims 1 to 20, characterized in that the tubular absorber (4) has inner ribs (46) for enlarging its inner surface which supplies energy to the heat transfer medium.

22. Device according to one or more of Claims 1 to 21, characterized in that the tubular absorber (4) has a tubular wall which is structured using a denting method known per se and has surface zones which project radially inwards, are shaped like beads and are distributed over the tubular wall.

23. Device according to one or more of Claims 1 to 22, characterized in that the solar collector (2) in each case has a holding element (50) at either end, the holding elements (50) preferably fixing both the inner absorber (4) and the outer energy concentrator (6) and, if appropriate, the reflector (38).

24. Device according to one or more of Claims 1 to 23, characterized in that each holding element (50) surrounds the tubular energy concentrator (6) tightly at the end, in particular by means of an elastic sealing element (52).

25. Device according to Claim 23 or 24, characterized in that each holding element (50) has at least one connection (70), which merges into the tubular absorber (4), for a connecting line (71) for the heat transfer medium.

26. Device according to one or more of Claims 1 to 25, characterized in that the absorber (4) consists of aluminium.

27. Device according to one or more of Claims 17 to 26, characterized in that the heat transfer medium is doped with metal, in particular doped with copper, and in this case is preferably inhibited in such a way that an electric connection to the absorber (4) is avoided.

28. Device according to one or more of Claims 1 to 27, characterized in that, at least in the region of the prism arrangement (12) and, if appropriate, of the lens element (84) thereof, the energy concentrator (6) has on the outside a dirt-repellent, transparent surface coating which is formed, in particular, from miniature ceramic particles.

## Revendications

1. Dispositif pour obtenir de l'énergie thermique et/ou électrique à partir de la lumière solaire, comprenant au moins un collecteur solaire (2) présentant un absorbeur (4), et un concentrateur d'énergie (6) qui entoure l'absorbeur (4) sur toute sa longueur et au moins partiellement sur sa périphérie, et concentre la lumière solaire optiquement sur l'absorbeur,
caractérisé en ce que le concentrateur d'énergie (6) présente, au moins dans une région périphérique irradiée de lumière solaire en fonction du parcours quotidien du soleil, un agencement de prismes (12) en une matière transparente comprenant une pluralité de prismes (14) s'étendant axialement, parallèlement à l'absorbeur (4) et répartis côte à côte sur la périphérie, tous les prismes (14) présentant une coupe transversale similaire, isocèle à pointes (18) orientées vers l'absorbeur (4), les prismes (14) présentant des axes (19) qui s'étendent à travers les pointes (18) et divisent en deux l'angle (β) de celles-ci, ces axes s'étendant sensiblement radialement à l'axe central du collecteur solaire (2), les prismes (14) ayant la forme de lentilles convexes-prismatiques dont les faces extemes (20) orientées vers la lumière solaire, ont une courbure convexe, ces faces extemes (20) étant respectivement formées par une face externe (22) du concentrateur d'énergie (6) s'étendant sur la région de plusieurs ou de la totalité des prismes (14), et ayant une section transversale d'arc de cercle, la géométrie des prismes (14) résultant en une focalisation de la lumière solaire sur une surface, de manière à ce que, pendant tout le parcours du soleil, la surface de focalisation soit toujours située dans une région recouvrant au moins partiellement la région de l'absorbeur (4).

2. Dispositif selon la revendication 1,
caractérisé en ce que le concentrateur d'energie (6) a la forme d'un tube entourant coaxialement l'absorbeur (4).

3. Dispositif selon la revendication 1 ou 2,
caractérisé en ce que l'agencement de prismes (12) s'étend sensiblement sur toute la périphérie du concentrateur d'énergie (6).

4. Dispositif selon la revendication 1 ou 2,
caractérisé en ce que l'agencement de prismes (12) ne s'étend que sur une région partielle en forme de demi-coupelle de la périhpérie du concentrateur d'énergie (6).

5. Dispositif selon la revendication 4,
caractérisé en ce que la région partielle restante de la périphérie en forme de tube du concentrateur d'energie (6), située en dehors de l'agencement de prismes (12) a soit la forme d'une coupelle tubulaire (24) reliée d'une pièce à l'agencement de prismes (12), soit d'un élément de boîtier relié à l'agencement de prismes (12) par des moyens de liaison.

6. Dispositif selon l'une ou plusieurs des revendications 1 à 5,
caractérisé en ce que, dans la région de l'agencement de prismes (12), on a formé au moins une zone de lentille (82) sans prismes, comportant un élément de lentille (84) allongé, parallèle aux prismes (14), et de coupe transversale convexe/concave, de manière à ce que les rayons lumineux (92) déviés transversalement à la manière de secantes par les prismes (14) rencontrent l'élément de lentille et soient déviés par celui-ci vers l'absorbeur (4).

7. Dispositif selon l'une ou plusieurs des revendication 1 à 6,
caractérisé en ce que, dans la région des prismes (14), l'agencement de prismes (12) est formé en un matériau sous forme de film ou de feuille (30) souple, plan à l'origine, présentant d'un côté une surface plane (28), et de l'autre, les prismes (14), ce matériau étant plié pour lui donner la forme d'un cylindre ou d'un secteur de cylindre.

8. Dispositif selon l'une ou plusieurs des revendications 1 à 6,
caractérisé en ce que le concentrateur d'énergie (6) est formé en tant qu'élément extrudé à partir d'une matière synthétique transparente comme le verre, l'élément de lentille (84) étant de préférence réalisé séparément et relié au reste de l'élément par la force et/ou la forme et/ou la matière.

9. Dispositif selon l'une ou plusieurs des revendications 1 à 8,
caractérisé en ce que le matériau (30) formant l'agencement de prisme (12) présente dans la région des prismes (14) une épaisseur (D), mesurée à partir de la surface exteme (28) jusqu'aux pointes (18), de 0,5 mm au moins, mais de préférence entre 1,5 et 2 mm.

10. Dispositif selon l'une ou plusieurs des revendications 1 à 9,
caractérisé en ce que les prismes (14) présentent une hauteur (H), mesurée radialement, à partir d'une base (32) dont le rapport à la longueur (L) des ailes du prisme et au diamètre externe (d) du concentrateur d'énergie (6) est de 1 : 2 environ : 100 environ, de préférence de 1 : 1,98 : 100,83.

11. Dispositif selon l'une ou plusieurs des revendications 1 à 10,
caractérisé en ce que la hauteur (H) du prisme par rapport à la largeur (B) de l'élément de lentille (84) et au rayon de courbure (Rᵥ) de la surface concave (88) de la lentille, ainsi que par rapport au rayon de courbure (Rₓ) de la surface convexe (86) de la lentille est de 1 : 100 environ : 63 environ : 60 à 61 environ, en particulier de 1 : 97 : 63,33 : 60, 83.

12. Dispositif selon l'une ou plusieurs des revendications 1 à 11,
caractérisé en ce que les prismes (14) présentent une hauteur (H) à partir d'une base (32) entre 0,15 et 0,8 mm environ, en particulier de 0,6 mm.

13. Dispositif selon l'une ou plusieurs des revendications 1 à 12,
caractérisé en ce que les prismes voisins (14) présentent entre eux un écart central (A) de 0,3 à 0,5 mm environ, ou un écart angulaire de 2°.

14. Dispositif selon l'une ou plusieurs des revendications 1 à 13,
caractérisé en ce que les surfaces de prismes adjacentes (34, 36) de deux prismes voisins (14) forment entre elles un angle (α') qui est inférieur/égal à 90° ou supérieur/égal à 90°.

15. Dispositif, en particulier selon l'une ou plusieurs des revendications 1 à 14,
caractérisé en ce que l'absorbeur (4) a la forme d'un tube et peut être parcouru par un agent caloporteur.

16. Dispositif selon l'une ou plusieurs des revendications 1 à 15,
caractérisé en ce que l'absorbeur (4) présente sur sa face externe des éléments photovoltaïques (8).

17. Dispositif selon l'une ou plusieurs des revendications 1 à 16,
caractérisé en ce qu'un réflecteur (38) est agencé sur la face de l'absorbeur (4) opposée au soleil.

18. Dispositif selon l'une ou plusieurs des revendications 1 à 17,
caractérisé en ce que l'espace (42) entre l'absorbeur (4) et le concentrateur d'énergie optique (6) est évacué ou peut être évacué.

19. Dispositif selon l'une ou plusieurs des revendications 1 à 18,
caractérisé par une pompe à vide alimentée au moins partiellement par les éléments photovoltaïques (8).

20. Dispositif selon l'une ou plusieurs des revendications 1 à 19,
caractérisé en ce que l'absorbeur (4) présente des nervures externes (44) pour augmenter sa surface absorbant de l'énergie.

21. Dispositif selon l'une ou plusieurs des revendications 1 à 20,
caractérisé en ce que l'absorbeur tubulaire (4) présente des nervures internes (46) pour augmenter sa surface interne qui transfère de l'énergie à l'agent caloporteur.

22. Dispositif selon l'une ou plusieurs des revendications 1 à 21,
caractérisé en ce que l'absorbeur tubulaire (4) présente une paroi tubulaire structurée selon un procédé de déformation connu en soi, comportant des zones de surface réparties sur la paroi tubulaire qui font radialement saillie vers l'intérieur et ont la forme de moulures.

23. Dispositif selon l'une ou plusieurs des revendications 1 à 22,
caractérisé en ce que le collecteur solaire (2) présente à ses deux extrémités respectivement un élément de maintien (50), les éléments de maintien (50) fixant de préférence aussi bien l'absorbeur interne (4) que le concentrateur d'énergie externe (6), ainsi qu'éventuellement le réflecteur (38).

24. Dispositif selon l'une ou plusieurs des revendications 1 à 23,
caractérisé en ce que chaque élément de maintien (50) entoure de manière étanche une extrémité du concentrateur d'energie tubulaire (6), en particulier au moyen d'un élément d'étanchéité élastique (52).

25. Dispositif selon la revendications 23 ou 24,
caractérisé en ce que chaque élément de maintien (50) présente au moins une connexion (70) prolongée par l'absorbeur tubulaire (4), pour une conduite de liaison (71) recevant l'agent caloporteur.

26. Dispositif selon l'une ou plusieurs des revendications 1 à 25,
caractérisé en ce que l'absorbeur (4) est en aluminium.

27. Dispositif selon l'une ou plusieurs des revendications 17 à 26,
caractérisé en ce que l'agent caloporteur est dopé de métal, en particulier de cuivre et inhibé de préférence pour qu'une liaison électrique avec l'absorbeur (4) soit évitée.

28. Dispositif selon l'une ou plusieurs des revendications 1 à 27,
caractérisé en ce que le concentrateur d'énergie (6) présente, au moins dans la région de l'agencement de prismes (12) et éventuellement de l'élément de lentille (84) de celui-ci, un revêtement de surface externe transparent, antisalissant, constitué en particulier par de minuscules particules céramiques.
